# EUROPÄISCHE PATENTSCHRIFT

(11) **EP 3 068 713 B1**
(45) Veröffentlichungstag und Bekanntmachung des Hinweises auf die Patenterteilung: **05.09.2018**
(21) Anmeldenummer: 14821554.4
(22) Anmeldetag: 15.12.2014
(51) Int. Cl.: B65G 47/08, A21C 9/08

(54) **VERFAHREN UND VORRICHTUNG ZUM FÖRDERN UND GRUPPIEREN VON STÜCKIGEN PRODUKTEN**
METHOD AND DEVICE FOR CONVEYING AND GROUPING FRAGMENTED PRODUCTS
PROCÉDÉ ET DISPOSITIF DE TRANSPORT ET DE REGROUPEMENT DE PRODUITS EN MORCEAUX

(30) Priorität: 19.12.2013 DE 102013226783
(43) Veröffentlichungstag der Anmeldung: 21.09.2016
(73) Patentinhaber: Loesch Verpackungstechnik GmbH, 96146 Altendorf (DE)
(72) Erfinder: HAMMACHER, Heinz-Peter, 96049 Bamberg (DE); PLEICHINGER, Roland, 91356 Kirchehrenbach (DE)
(74) Vertreter: Prüfer & Partner mbB Patentanwälte · Rechtsanwälte
(86) Internationale Anmeldenummer: PCT/EP2014/077745
(87) Internationale Veröffentlichungsnummer: WO 2015/091350

(56) Entgegenhaltungen:
- EP-A1- 0 284 835
- WO-A1-03/057602
- WO-A1-2013/152798
- DE-A1- 1 556 704
- US-A- 3 460 667
- US-A- 3 529 711
- US-A1- 2010 051 416
- US-A1- 2010 163 368

## Beschreibung

Die Erfindung betrifft ein Verfahren und eine Vorrichtung zum Fördern und Gruppieren von stückigen Produkten derart, dass die Produkte auf einer oder mehreren nebeneinander angeordneten Förderbahnen aus einem Produktstrom vereinzelt und zu Produktgruppen oder einer sich über alle Förderbahnen erstreckenden definierten Produktmatrix zusammengefasst werden.
Die Erfindung betrifft ein Verfahren und eine Vorrichtung zum Fördern und Gruppieren von stückigen Produkten, wie sie beispielsweise in Verbindung mit einer Verpackungsmaschine zum Einsatz kommen können, mittels der die stückigen Produkte verpackt werden. Bei den Produkten kann es sich beispielsweise um empfindliche Produkte der Süß- oder Dauerbackwarenindustrie handeln, wie beispielsweise Kekse, Schokoladenprodukte, und dergleichen. Neben Produkten der Lebensmittelindustrie sind beispielsweise aber auch technische Produkte denkbar, wie elektronische oder elektrotechnische Komponenten, Maschinenelemente, pharmazeutische oder medizinische Produkte, und dergleichen, die typischerweise in großen Stückzahlen hergestellt und vertrieben werden.

Insbesondere bei Verpackungsmaschinen für Süß- oder Dauerbackwaren ist es typischerweise erforderlich, dass die einzelnen Produkte regelmäßig und geordnet zu einer Verpackungsstation oder einer anderen Weiterverarbeitungsstation zugeführt werden. Hierbei ist es somit erforderlich, die einzelnen Produkte aus einem mehr oder weniger unregelmäßigen zugeführten Produktstrom zu separieren und zu regelmäßigen, geordneten Produktgruppen oder Produktmatrizen oder Produktteppichen zusammenzufassen, in denen die Produkte vorzugsweise unter konstanten, gleichen Abständen zueinander nebeneinander und/oder hintereinander angeordnet sind. Die so gebildeten Produktgruppen oder Produktmatrizen sollen dann im Wesentlichen unter Beibehaltung ihrer Gesamtform bzw. der relativen Anordnung oder Ausrichtung der einzelnen Produkte zueinander innerhalb der Produktgruppe oder Produktmatrix weiter gefördert werden.

Aus der WO 2012/038475 A2 sind beispielsweise ein Verfahren und eine Vorrichtung zum Befüllen einer mehrreihigen Verpackungsschale mit stückigen Produkten bekannt, insbesondere eine sogenannte Tray-Loading-Verpackungsmaschine. Bei dieser bekannten Verpackungsmaschine werden aufeinanderfolgende Reihen nebeneinander angeordneter Einzelprodukte gebildet, die quer zur Förderrichtung exakt miteinander ausgerichtet sind. Am Ende einer Förderstrecke wird diese einreihige Produktgruppe an eine Verpackungsschale (Tray) übergeben, wobei die nebeneinanderliegenden Einzelprodukte einer Reihe gleichzeitig in mehrere nebeneinander angeordnete Fächer der Verpackungsschale übergeben werden. Die vorliegende Erfindung kann beispielsweise im Rahmen einer derartigen Verpackungsmaschine eingesetzt werden.

Die WO 2013/152798 A1 beschreibt den Oberbegriff des Anspruchs 1 und eine Vorrichtung und ein Verfahren zum Fördern von stückigen Produkten. Hierbei werden die Produkte auf mehreren nebeneinander angeordneten Förderbahnen in einer vorgegebenen Art und Weise miteinander ausgerichtet, so dass beliebige Muster von Produktgruppen oder Produktteppichen oder Produktmatrizen erzeugt werden, wobei derartige Produktmuster oder Produktgruppen, soweit gewünscht und erforderlich, auch Lücken oder Leerstellen aufweisen können, d.h. Positionen innerhalb einer solchen Produktgruppe, die nicht von einem Produkt besetzt sind. Bei diesem bekannten Verfahren und dieser bekannten Vorrichtung kann die jeweilige Position eines einzelnen Produkts innerhalb der Produktgruppe oder Produktmatrix sowohl bahnweise als auch reihenweise (d.h. quer zu den Förderbahnen) genau gewählt und angesteuert werden, so dass die einzelnen Produkte und ggfs. zu bildende Produktlücken oder -leerstellen entsprechend dem zu erzeugenden Muster exakt miteinander ausgerichtet werden können.
Bei diesen bekannten Verfahren und Vorrichtungen zum Fördern und Gruppieren stückiger Produkte besteht grundsätzlich das Problem, dass die gebildete Produktgruppe oder Produktmatrix im Verlauf der weiteren Förderung ihre Form und insbesondere die relative Ausrichtung der einzelnen Produkte zueinander innerhalb der Produktmatrix oder Produktgruppe beibehalten soll, damit diese Produktgruppe oder Produktmatrix in ihrer geordneten Form zu einem nächsten Verfahrensschritt zugeführt werden kann, beispielsweise der gleichmäßigen und gleichzeitigen Befüllung einzelner Fächer oder Fächerreihen einer Verpackungsschale mit den einzelnen Produkten oder Produktreihen. Hierfür muss demnach ein gleichmäßiger und geordneter, ggfs. identischer Füllgrad auf den mehreren, nebeneinander angeordneten Produktbahnen für den nachfolgenden Prozessschritt (z.B. Verpackungsschritt) gegeben sein.

Die dafür geforderte Beibehaltung der Gesamtform einer gebildeten Produktgruppe oder Produktmatrix ist besonders problematisch, wenn die Förderstrecke ihre Richtung ändert. So kann es beispielsweise bei einer Kurve in der Förderstrecke dazu kommen, dass die Produktgruppe verzerrt wird, so dass die Produktgruppe im Anschluss an die Kurve nicht mehr ihre ursprüngliche Form und Ausrichtung aufweist, oder dass die Produkte innerhalb der Produktmatrix dann nicht mehr geordnet, regelmäßig neben- und/oder hintereinander liegen. Dieses kann beispielsweise an unterschiedlichen Kurven- oder Winkelgeschwindigkeiten liegen, mit denen sich die einzelnen Produkte innerhalb einer Produktmatrix auf ihren Bahnen in einer Kurve in der Förderstrecke bewegen.

Um einen gleichmäßigen Füllgrad mehrerer parallel laufender Produktbahnen und insbesondere eine Beibehaltung der Form und Ausrichtung einer gebildeten Produktgruppe oder Produktmatrix bei einem Richtungswechsel in der Förderstrecke für einen nachgeschalteten Prozess zu erzielen, wenn die einzelnen Produkte von einem vorgeschalteten Prozess unregelmäßig und/oder in beliebigen Abständen zueinander zugeführt werden, sind im Stand der Technik verschiedene Maßnahmen bekannt:
Mit einem sogenannten "Umsetzroboter" kann ein Ausgleich zwischen den nebeneinander angeordneten Bahnen durch ein Umsetzen von Produkten von Bahnen mit einem höheren Füllgrad auf Bahnen mit einem geringeren Füllgrad erfolgen. Problematisch ist hierbei jedoch das Einbringen der umgesetzten Produkte in den Produktstrom der jeweiligen Förderbahn. Bei empfindlichen Produkten (wie z.B. Keksen, insbesondere doppellagigen Keksen mit Cremefüllung) besteht darüber hinaus das Risiko einer Beschädigung (z.B. Abheben einer Kekslage oder -schicht) durch die Greifeinrichtungen des Roboters oder im Falle einer Ansaugung des Produkts. Bei empfindlichen Produkten ist daher ein Umsetzen mittels eines Roboters in der Regel nicht möglich.

Bei einer anderen bekannten Maßnahme werden die Produkte von einem Förderband auf ein "Luftbett" gebracht, bei dem beispielsweise durch eine perforierte Platte von unten Luft in die Förderbahn einströmt, die die Produkte leicht anhebt, so dass die Produkte quasi auf einem Luftbett schweben. Die Produkte liegen auf der Platte dabei im Stau aneinander (d.h. die Produkte "drängeln" sich auf der Platte). Entsprechendes gilt für Führungseinrichtungen, die eine Abführung von Produkten auf mehrere Bahnen ermöglichen sollen. Der Füllgrad der Abgabebahnen reguliert sich dabei beispielsweise über den Staudruck in der Förderstrecke der Produkte. Hierbei kommt es somit zu unerwünschten Berührungen der Produkte untereinander sowie der Produkte mit den umgebenden Führungselementen. Dieses bringt wiederum das Risiko der Beschädigung der Produkte sowie das Problem einer Verschmutzung der Fördereinrichtungen durch Produktabrieb und/oder -bruchstücke mit sich.

Des Weiteren ist es im Stand der Technik bekannt, Produkte mit Seitenführungen und umschaltbaren Leitblechen (sogenannte "Flipper") aus einem zugeführten (unregelmäßigen) Produktstrom auf eine gewünschte Anzahl von Förderbahnen zu führen. Sofern es zu einer ungleichmäßigen Befüllung einzelner Bahnen kommt, werden die Leitbleche dann umgeschaltet und die Produkte entsprechend auf andere, bisher zu gering gefüllte Bahnen, geführt. Dieses Verfahren ist jedoch für bestimmte Anwendungen zu träge und/oder zu langsam. Bei einer größeren Anzahl nebeneinander angeordneter Bahnen ist eine Umverteilung der Produkte außerdem teilweise nur mit hohem Aufwand möglich.

Schließlich ist es im Stand der Technik auch bekannt, einen Ausgleich von Füllständen in den Zuführbahnen durch ein Ausschleusen von Produkten von überfüllten Bahnen zu erreichen. Hierbei entsteht unter Umständen allerdings eine große, nicht erwünschte Menge an Produkten, die ausgeschleust und damit beispielsweise in einer Verpackungsmaschine letztlich nicht verpackt werden, obwohl diese Produkte an sich keine Mängel aufweisen.

Ausgehend von diesen bekannten Vorrichtungen und Verfahren liegt der Erfindung die Aufgabe zugrunde, die oben beschriebenen Nachteile des Standes der Technik zu überwinden und somit ein verbessertes Verfahren sowie eine verbesserte Vorrichtung zum Fördern und Gruppieren von stückigen Produkten zu schaffen. Insbesondere sollen ein Verfahren und eine Vorrichtung geschaffen werden, die einen gleichmäßigen, ggfs. identischen Füllgrad mehrerer nebeneinander angeordneter Produktförderbahnen für einen nachgeschalteten (ausgangsseitigen) Prozess (z.B. einen Verpackungsprozess) bewerkstelligen, wenn von einem vorgeschalteten (eingangsseitigen) Prozess ein mehr oder weniger unregelmäßiger Produktstrom zugeführt wird, in dem die Produkte beispielsweise in beliebigen Abständen hintereinander und/oder nebeneinander liegen oder bei dem einzelne Produkte oder ganze Produktreihen fehlen. Das Erfordernis eines gleichmäßigen Füllgrads auf den ausgangsseitigen Produktbahnen umfasst auch das Erfordernis, dass eine in der Förderstrecke gebildete, regelmäßige oder unregelmäßige Produktgruppe oder Produktmatrix auch nach einem Richtungswechsel der Förderstrecke noch ihre definierte Form und Ausrichtung aufweist.

Vorzugsweise sollen darüber hinaus ein Verfahren und eine Vorrichtung geschaffen werden, die eine Vermischung einzelner Produkte verschiedener Zuführbahnen (die beispielsweise unterschiedliche Produktqualitäten oder -merkmale aufweisen) ermöglichen. Schließlich sollen ein Verfahren und eine Vorrichtung geschaffen werden, die eine Veränderung der Anzahl der eingangsseitigen Zuführbahnen auf eine beliebige andere Anzahl ausgangsseitiger Bahnen, auf denen die Produkte an den nächsten Prozessschritt abgegeben werden, ermöglichen.
Die genannte Aufgabe wird erfindungsgemäß gelöst durch ein Verfahren zum Fördern und Gruppieren von stückigen Produkten gemäß Patentanspruch 1. Die genannte Aufgabe wird erfindungsgemäß des Weiteren gelöst durch eine Vorrichtung zum Fördern und Gruppieren von stückigen Produkten gemäß Patentanspruch 5. Erfindungsgemäß werden somit ein Verfahren und eine Vorrichtung zum Fördern und Gruppieren von stückigen Produkten geschaffen, die folgende Verfahrensschritte und Vorrichtungsmerkmale aufweisen: Zuführen der Produkte mittels einer ersten Fördereinrichtung in einer Bahn in einer ersten Förderrichtung, wobei die Produkte in der Bahn in Förderrichtung in beliebigen Abständen hintereinander liegen; Gruppieren der Produkte in der Bahn mittels einer Gruppiereinrichtung derart, dass in Förderrichtung hinter der Gruppiereinrichtung eine definierte Anzahl von Produkten in einer Gruppe angeordnet ist, wobei die Produkte in jeder Gruppe mit definierten Abständen in Förderrichtung hintereinander in der Bahn angeordnet sind; Weiterfördern der gebildeten Produktgruppe mittels der ersten Fördereinrichtung in der ersten Förderrichtung; und Übergeben der gebildeten Produktgruppe an eine zweite Fördereinrichtung zum Weiterfördern der Produkte in einer zweiten Förderrichtung derart, dass die Produkte ihre relative Ausrichtung mit den definierten Abständen zueinander in der Produktgruppe beibehalten und im Wesentlichen in einer Reihe nebeneinander liegen. Erfindungsgemäß werden ein Verfahren und eine Vorrichtung zum Fördern und Gruppieren von stückigen Produkten geschaffen, bei denen die Produkte mittels einer ersten Fördereinrichtung auf mehreren, unter im Wesentlichen gleichen Abständen nebeneinander und im Wesentlichen parallel zueinander angeordneten Bahnen in der ersten Förderrichtung zugeführt werden, wobei in jeder Bahn mittels einer Gruppiereinrichtung Produktgruppen gebildet werden, wobei die Bildung der Produktgruppen in den einzelnen Bahnen derart miteinander synchronisiert wird, dass in Förderrichtung hinter den Gruppiereinrichtungen der nebeneinander angeordneten Bahnen eine definierte Produktmatrix gebildet wird, in der die Produkte in den Bahnen in Förderrichtung mit definierten Abständen hintereinander und in Reihen unter den Bahnabständen oder einem ganzzahligen Vielfachen davon nebeneinander angeordnet sind, und wobei die in der ersten Fördereinrichtung gebildete Produktmatrix derart an die zweite Fördereinrichtung übergeben wird, dass die Produkte ihre relative Ausrichtung zueinander in der Produktmatrix derart beibehalten, dass die vor der Übergabe in der ersten Fördereinrichtung in der Produktmatrix in einer Reihe nebeneinander angeordneten Produkte nach der Übergabe in der zweiten Fördereinrichtung in der Produktmatrix unter definierten Abständen, die den Bahnabständen der ersten Fördereinrichtung oder einem ganzzahligen Vielfachen davon entsprechen, in einer Bahn hintereinander angeordnet sind.
In einer besonderen Ausführungsform des erfindungsgemäßen mehrreihigen Förder- und Gruppierverfahrens sowie der zugehörigen Vorrichtung ist für jede Bahn der auf der ersten Fördereinrichtung zugeführten Produkte eine gesonderte Gruppiereinrichtung vorgesehen, wobei Steuerungseinrichtungen zum Synchronisieren dieser einzelnen Gruppiereinrichtungen miteinander zur Bildung der Produktmatrix vorgesehen sind. In diesem Fall kann die Bildung der Produktgruppen in den einzelnen Bahnen in der ersten Fördereinrichtung zur Bildung der Produktmatrix derart miteinander synchronisiert werden, dass einzelne, gesamte Bahnen in der Produktmatrix nicht mit Produkten besetzt werden, wenn vor den Gruppiereinrichtungen in den betroffenen Bahnen keine oder zu wenige Produkte für die Bildung einer vollständigen Produktgruppe zugeführt werden. Erfindungsgemäß können die Gruppiereinrichtungen in den einzelnen Bahnen zur Bildung der Produktmatrix alternativ auch derart gesteuert und miteinander synchronisiert werden, dass einzelne definierte Positionen in der Produktmatrix nicht mit Produkten besetzt werden, so dass entsprechend den jeweils gegebenen Anforderungen eine regelmäßige oder unregelmäßige Produktmatrix gebildet wird, die entsprechende Produktlücken aufweist. Erfindungsgemäß weist die Förder- und Gruppiervorrichtung ein sogenanntes "Pull-Nose-Band" auf, das dadurch gekennzeichnet ist, dass die erste Fördereinrichtung mindestens ein umlaufendes Förderband zur Förderung der Produkte in der ersten Förderrichtung aufweist, wobei das Förderband ein in Förderrichtung vorderes Ende aufweist, das in einem Bereich über der zweiten Fördereinrichtung angeordnet ist und das von hier aus entgegengesetzt zu der ersten Förderrichtung zurückziehbar ist, während das Förderband die Produktförderung in der ersten Förderrichtung fortsetzt, wobei die Übergabe der Produkte an die zweite Fördereinrichtung dadurch erfolgt, dass das vordere Ende des Förderbands zurückgezogen wird, wenn eine vollständige Produktgruppe oder Produktmatrix das vordere Ende des Förderbands erreicht, und wobei das vordere Ende des Förderbands nach der Übergabe der Produkte an die zweite Fördereinrichtung aus der zurückgezogenen Stellung wieder in den Bereich über der zweiten Fördereinrichtung vorgeschoben wird.

Mit dem erfindungsgemäßen Verfahren und der erfindungsgemäßen Vorrichtung können somit beliebige, regelmäßige oder unregelmäßige Muster von Produktgruppen oder Produktmatrizen oder Produktteppichen gebildet werden, die unter Beibehaltung dieses gebildeten Musters, d.h. der relativen Anordnung der einzelnen Produkte innerhalb der Produktgruppe oder Produktmatrix, von einer ersten Fördereinrichtung an eine zweite Fördereinrichtung übergeben werden können, wobei sich die Förderrichtungen der beiden aufeinanderfolgenden Fördereinrichtungen unterscheiden. In einer Ausführungsform der Erfindung verlaufen die beiden Förderrichtungen insbesondere senkrecht zueinander, d.h. es erfolgt im Wesentlichen eine rechtwinklige Umlenkung der Produktförderung.

Durch die Erfindung kann somit insbesondere auch ein gleichmäßiger, ggfs. identischer Füllgrad mehrerer ausgangsseitiger Produktbahnen für einen nachgeschalteten Verarbeitungsschritt (z.B. einen Verpackungsprozess) bewerkstelligt werden, wenn eingangsseitig ein unregelmäßiger Produktstrom von einem vorgeschalteten Prozessschritt zugeführt wird, d.h. ein Produktstrom, in dem z.B. einzelne Produkte oder ganze Produktreihen oder Produktbahnen abschnittsweise oder vollständig fehlen. Auf diese Weise kann gewissermaßen ein Produktausgleich in den Bahnen oder Reihen geschaffen werden.

Erfindungsgemäß kann darüber hinaus eine Vermischung von Produkten unterschiedlicher Zuführbahnen erreicht werden, was beispielsweise bei ungleichen Qualitäten oder Merkmalen der Produkte der verschiedenen eingangsseitigen Zuführbahnen relevant ist, z.B. bei unterschiedlichen Bräunungsgraden oder Gewichten der einzelnen Backwarenprodukte.

Schließlich kann mittels des erfindungsgemäßen Verfahrens und der zugehörigen Vorrichtung die Anzahl der eingangsseitigen Produktbahnen auf eine beliebige andere Anzahl ausgangsseitiger Produktbahnen verändert werden, und zwar insbesondere ohne dass die einzelnen Produkte auf den einzelnen Bahnen aneinander stoßen. Hierdurch wird eine schonende Behandlung der Produkte erreicht, was insbesondere bei Backwaren relevant sein kann.

Weitere Einzelheiten und Vorteile der Erfindung ergeben sich aus der nachfolgenden detaillierten Beschreibung verschiedener Ausführungsbeispiele anhand der beigefügten Zeichnungen.
- Fig. 1: zeigt die erfindungsgemäße Förder- und Gruppiervorrichtung mit darauf angeordneten Produkten schematisch in einer Ansicht von oben.
- Fig. 2: entspricht der Darstellung der Fig. 1, wobei sich jedoch die Anordnung der geförderten Produkte unterscheidet.
- Fig. 3: entspricht ebenfalls der Darstellung der Fig. 1, wobei Produkte mit unterschiedlichen Merkmalen oder unterschiedlicher Qualität gefördert werden.

Wie die Zeichnungen zeigen, besteht die Förder- und Gruppiervorrichtung aus einer ersten Fördereinrichtung 10 und einer quer, insbesondere senkrecht dazu verlaufenden zweiten Fördereinrichtung 50. Auf diesen Fördereinrichtungen werden stückige Produkte P (z.B. Backwaren, wie Kekse) gefördert und zu Produktgruppen PG oder Produktmatrizen PM zusammengefasst und weiter gefördert. Auf der ersten Fördereinrichtung 10 werden die Produkte P in einer ersten Förderrichtung FR1 gefördert, und auf der zweiten Fördereinrichtung 50 werden die Produkte P, insbesondere in Form jeweils einer Produktmatrix PM, in einer zweiten Förderrichtung FR2 gefördert. Die zweite Förderrichtung FR2 verläuft dabei insbesondere senkrecht zu der ersten Förderrichtung FR1 (vgl. Zeichnungen). Die beiden Förderrichtungen FR1 und FR2 können aber auch unter einem Winkel schräg zueinander angeordnet sein (in den Zeichnungen nicht dargestellt).

Wie die Figuren weiter zeigen, ist die erste Fördereinrichtung 10 insbesondere aus einem ersten, eingangsseitigen Förderband 12 sowie einem diesem nachgeschalteten, zweiten Förderband 14 gebildet. Die Produkte P werden von dem ersten Förderband 12 an das zweite Förderband 14 übergeben. Im Bereich dieses Übergangs von dem ersten Förderband 12 auf das zweite Förderband 14 ist eine Gruppiereinrichtung 30 angeordnet, die Einrichtungen für einen Eingriff in den Produktfluss aufweist, um die auf dem ersten Förderband 12 mehr oder weniger ungeordnet zugeführten Produkte P auszurichten und insbesondere zu definierten Produktgruppen PG zusammenzufassen, so dass die Produkte P in einer geordneten, definierten Anordnung als Produktgruppe PG oder Produktmatrix PM auf dem zweiten Förderband 14 weiter gefördert werden können.

Zu diesem Zweck kann die Gruppiereinrichtung 30 beispielsweise durch eine Walze oder eine umlaufende Ketten- oder Riemenfördereinrichtung gebildet sein, deren Drehachse quer bzw. senkrecht zu der Förderrichtung FR1, FR2 liegt. Die Gruppiereinrichtung 30 weist umlaufende, starre oder bewegliche Mitnehmer für einen Eingriff zwischen zwei aufeinanderfolgende Produkte P auf (in den Zeichnungen nicht dargestellt). Die Gruppiereinrichtung 30 kann darüber hinaus Stoppereinrichtungen aufweisen oder mittels geeigneter Steuerungseinrichtungen in gesteuerter Weise mit vorgeschalteten Stoppereinrichtungen zusammenarbeiten, um die auf dem ersten Förderband 12 zugeführten Produkte P nach Bedarf aufzustauen.

Die Gruppiereinrichtung 30 kann in einer Ausführungsform im Wesentlichen als Walze oder Trommel ausgebildet sein, die sich mittels einer starren Achse über die gesamte Breite der ersten Fördereinrichtung 10 erstreckt. In diesem Fall müssen der Gruppiereinrichtung 30 in jeder Bahn der zugeführten Produkte P Stoppereinrichtungen vorgeschaltet sein, um die gesteuerte Ausrichtung der Produkte P zur Übergabe an das zweite Förderband 14 zu bewerkstelligen.

Alternativ kann die Gruppiereinrichtung 30 für jede Bahn der auf dem ersten Förderband 12 zugeführten Produkte P eine gesonderte, eigene Gruppiereinrichtung vorsehen. Jede dieser einzelnen Gruppiereinrichtungen kann dabei wiederum eine umlaufende Mitnehmerfördereinrichtung sein, deren Rotationsgeschwindigkeit für jede Bahn individuell regelbar ist. In diesem Fall sind zusätzlich Steuerungseinrichtungen (einschließlich Detektor- oder Sensoreinrichtungen, z.B. Kameras zur Überwachung der zugeführten Produkte) erforderlich, um die Bewegung der einzelnen Gruppiereinrichtungen der mehreren, nebeneinander angeordneten Produktbahnen zu steuern und miteinander zu synchronisieren, um dadurch eine definierte mehrbahnige Produktmatrix PM auf dem zweiten Förderband 14 zu bilden. In diesem Fall der individuellen Gruppiereinrichtungen für jede Bahn sind in der Regel keine vorgeschalteten Stoppereinrichtungen notwendig, da die Produkte in der betroffenen Bahn einfach durch einen (zeitweisen) gesteuerten Stillstand der betroffenen Gruppiereinrichtung aufgestaut werden können. Die vorstehend beschriebene Gruppiereinrichtung ist beispielsweise bekannt aus der WO 2013/152798 A1.

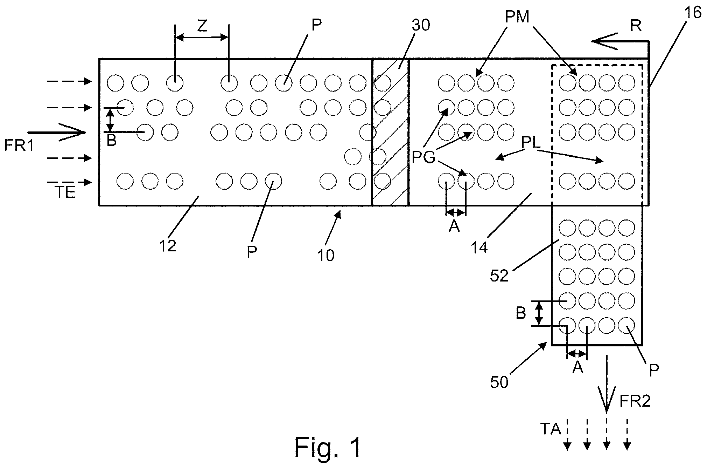

Wie die Figuren weiter zeigen, werden die einzelnen Produkte P eingangsseitig auf dem ersten Förderband 12 in einer beliebigen Anzahl nebeneinander angeordneter Bahnen TE in der ersten Förderrichtung FR1 transportiert. Die einzelnen Bahnen TE haben einen Abstand B zueinander. In Förderrichtung können die Produkte P in den Bahnen in beliebigen Abständen Z hintereinander liegen. In Abhängigkeit von den eingangsseitig vorgeschalteten Prozessen können auf den einzelnen Bahnen TE somit einzelne Produkte fehlen, oder einzelne Bahnen können dauerhaft oder phasenweise gar nicht mit Produkten gefüllt sein. So zeigt Fig. 1 beispielhaft eine Förderung von Produkten P auf fünf nebeneinander angeordneten Bahnen, wobei die in Fig. 1 von oben gerechnet vierte Bahn im Wesentlichen nicht mit Produkten gefüllt ist.

Mittels des ersten Förderbands 12 werden die Produkte P somit bahnweise zu der Gruppiereinrichtung 30 transportiert, die die Produkte P, wie vorstehend beschrieben, gesteuert aufstaut und wieder freigibt.

Durch die Gruppiereinrichtung 30 werden die Produkte P in ihrer jeweiligen Bahn TE so zusammengefasst und gesteuert freigegeben und an das zweite Förderband 14 übergeben, dass in Förderrichtung hinter der Gruppiereinrichtung 30 eine definierte Anzahl der Produkte P in einer Gruppe PG angeordnet ist, wobei die Produkte P in dieser Gruppe PG mit definierten Abständen A in Förderrichtung FR1 hintereinander in ihrer jeweiligen Bahn angeordnet sind. Mittels des zweiten Förderbands 14 wird die so gebildete Produktgruppe PG dann in der Förderrichtung FR1 weitergefördert.

Diese Bildung der Produktgruppe PG erfolgt in gleicher Weise in jeder der nebeneinander angeordneten Bahnen TE. Dabei wird die Bildung der Produktgruppen PG in den einzelnen Bahnen TE derart miteinander synchronisiert, dass in Förderrichtung FR1 hinter den Gruppiereinrichtungen 30 der mehreren Bahnen eine definierte Produktmatrix PM gebildet wird. In dieser Produktmatrix PM liegen die Produkte P in jeder der Bahnen TE in Förderrichtung mit definierten Abständen A hintereinander und unter den Abständen B der Bahnen TE oder einem ganzzahligen Vielfachen davon in Reihen nebeneinander. Die Produktmatrix PM wird somit aus mehreren nebeneinander liegenden, miteinander ausgerichteten Produktgruppen PG gebildet.

In Fig. 1 verlaufen die Reihen der gebildeten Produktmatrix PM somit senkrecht zu der Förderrichtung FR1, während die Bahnen der gebildeten Produktmatrix PM in Förderrichtung FR1 verlaufen. Die in Fig. 1 dargestellte, von der Gruppiereinrichtung 30 gebildete Produktmatrix PM besteht somit prinzipiell aus vier hintereinander angeordneten Reihen und fünf nebeneinander angeordneten Bahnen, mithin also aus maximal 20 einzelnen Produkten P bzw. Produktpositionen. In dem in den Figuren dargestellten Beispiel ist jedoch die (von oben gerechnet) vierte Bahn der Produktmatrix PM nicht mit Produkten besetzt, d.h. diese Bahn bleibt hier leer. Hier bestehen somit eine bzw. mehrere Produktlücken oder Produktleerstellen PL. Letzteres ist dadurch bedingt, dass eingangsseitig in dieser Bahn keine oder zu wenige Produkte P zugeführt wurden, um eine vollständige Produktgruppe PG zu bilden, d.h. um die (jetzt leer gebliebene) Bahn der Produktmatrix PM vollständig mit Produkten zu füllen. Die eingangsseitig auf dieser Bahn doch (vereinzelt) zugeführten Produkte werden von der Gruppiereinrichtung 30 dann so lange aufgestaut, bis eine ausreichende Anzahl von Produkten P ansteht, um eine vollständige Produktgruppe PG zu bilden bzw. die betroffene Bahn der Produktmatrix PM vollständig mit Produkten zu füllen. Anders ausgedrückt wird die betroffene Bahn damit phasenweise oder vollständig für die Produktweiterförderung gesperrt, d.h. die Produktförderung erfolgt ggfs. nur sequentiell.

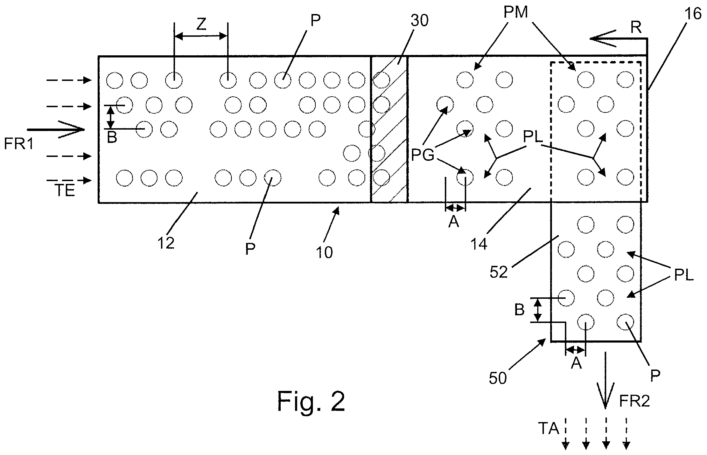

In entsprechender Weise kann die Förderarbeit der Gruppiereinrichtung 30 bzw. der einzelnen Gruppiereinrichtungen pro Bahn so gesteuert und insbesondere miteinander synchronisiert werden, dass die Produkte P derart von den Gruppiereinrichtungen aufgestaut und wieder freigegeben werden, dass einzelne, gewünschte oder definierte Positionen in der Produktmatrix PM gezielt frei bleiben (Produktlücke PL) bzw. alternativ mit Produkten P besetzt werden. Auf diese Weise kann eine individuell gewünschte, regelmäßige oder unregelmäßige Produktmatrix PM mit einer beliebig steuerbaren Anordnung der Produkte P gebildet werden. Eine derartige Produktmatrix PM, in der sich Produkte P mit Leerstellen PL abwechseln, ist in Fig. 2 schematisch dargestellt. Es versteht sich somit, dass auch jedes andere beliebige Muster der Anordnung der Produkte P innerhalb der Produktmatrix PM erzeugt werden kann.

Nachdem die Produktmatrix PM, wie vorstehend beschrieben, gebildet worden ist, wird sie von der ersten Fördereinrichtung 10, insbesondere von dem zweiten Förderband 14, an die zweite Fördereinrichtung 50 zum Weiterfördern der Produkte in der zweiten Förderrichtung FR2 derart übergeben, dass die Produkte P ihre relative Ausrichtung innerhalb jeder Produktgruppe PG mit den definierten Abständen A zueinander beibehalten und auf der zweiten Fördereinrichtung 50 dann im Wesentlichen in einer Reihe nebeneinander liegen.

In der bevorzugten Ausführungsform, bei der eingangsseitig mehrere Produktbahnen TE nebeneinander angeordnet sind und bei der zunächst eine Produktmatrix PM gebildet wird (die aus mehreren nebeneinander angeordneten Produktgruppen PG besteht, wie oben beschrieben wurde), wird die Produktmatrix PM derart an die zweite Fördereinrichtung 50 übergeben, dass die Produkte P ihre relative Ausrichtung zueinander in der Produktmatrix PM derart beibehalten, dass die vor der Übergabe auf dem zweiten Förderband 14 in der Produktmatrix PM in einer Reihe nebeneinander angeordneten Produkte P nach der Übergabe in der zweiten Fördereinrichtung 50 in der Produktmatrix PM unter definierten Abständen in einer Bahn TA hintereinander angeordnet sind, wobei diese definierten Abstände den Abständen B der einzelnen nebeneinander angeordneten, eingangsseitigen Bahnen TE der ersten Fördereinrichtung 10 oder einem ganzzahligen Vielfachen davon entsprechen.

Anders ausgedrückt hängen die Abstände, unter denen die Produkte P innerhalb der Produktmatrix PM auf der zweiten Fördereinrichtung 50 in einer Bahn hintereinander angeordnet sind, davon ab, ob die einzelnen Positionen einer Reihe der Produktmatrix PM im Anschluss an die Gruppiereinrichtung 30 mit einem Produkt besetzt wurden oder leer geblieben sind. Bei dem in Fig. 1 dargestellten Beispiel, bei dem die (von oben gerechnet) vierte Bahn der Produktmatrix PM in der ersten Fördereinrichtung 10 leer geblieben ist, liegen folglich die Produkte P in der zweiten Fördereinrichtung 50 in diesem Bereich mit einem Abstand 2B in der Bahn der auf der zweiten Fördereinrichtung 50 geförderten Produktmatrix PM hintereinander. Entsprechendes gilt analog für den Abstand A der in den Reihen der Produktmatrix PM in der zweiten Fördereinrichtung 50 nebeneinander liegenden Produkte P.

Die Übergabe der so gebildeten Produktmatrix PM von der ersten Fördereinrichtung 10 auf die zweite Fördereinrichtung 50 erfolgt vorzugsweise mit einem sogenannten Pull-Nose-Band. Insbesondere ist das zweite Förderband 14 der ersten Fördereinrichtung 10 als ein solches Pull-Nose-Band ausgebildet. Das zweite Förderband 14 weist dabei ein in der ersten Förderrichtung FR1 vorderes Ende (bzw. Kante) 16 auf, das in einer ersten Stellung in einem Bereich über der zweiten Fördereinrichtung 50 angeordnet ist. Die zweite Fördereinrichtung 50 liegt in diesem Überlappungsbereich also unter der ersten Fördereinrichtung 10, wie es durch die gestrichelte Linie in Fig. 1 dargestellt ist. Ausgehend von dieser Endstellung kann das vordere Ende 16 des zweiten Förderbands 14 entgegengesetzt zu der ersten Förderrichtung FR1 zurückgezogen werden, in Fig. 1 also nach links in Richtung des Pfeils R. Wesentlich ist es hierbei, dass diese Rückzugsbewegung des vorderen Endes 16 des Förderbands 14 erfolgt, während das Förderband 14 mittels seiner umlaufenden Bewegung die Produkte P weiterhin in der ersten Förderrichtung FR1 fördert.

Die Übergabe der Produkte P an die zweite Fördereinrichtung 50 erfolgt dabei in der Form, dass das vordere Ende 16 des Förderbands 14 in der Richtung R zurückgezogen wird, wenn eine vollständige Produktgruppe PG oder Produktmatrix PM das vordere Ende 16 des Förderbands 14 erreicht hat. Durch den schnellen Rückzug der vorderen Bandkante (vorderes Ende 16) des Förderbands 14 fallen die Produkte somit auf ein darunter angeordnetes Förderband 52 der zweiten Fördereinrichtung 50. Hierbei fallen insbesondere alle Produkte innerhalb einer Produktmatrix PM sukzessive oder mehr oder weniger gleichzeitig auf das darunterliegende Querförderband 52.

Dabei ist es wesentlich, dass die Produkte derart auf das Querförderband 52 abgelegt werden, dass sie nicht durcheinander fallen. Vielmehr bleiben die relative Ausrichtung der Produkte innerhalb der Produktmatrix zueinander und insbesondere die Gesamtform und Ausrichtung der Produktmatrix PM unverändert erhalten. Die Produktmatrix PM kann somit anschließend in unveränderter Form auf dem quer verlaufenden Förderband 52 abtransportiert werden. Aufgrund dieser Übergabe der Produktmatrix PM sind somit aus den Reihen der Produktmatrix auf der ersten Fördereinrichtung 10 Bahnen TA der Produktmatrix auf der zweiten Fördereinrichtung 50 geworden, und entsprechend sind aus den Bahnen TE der Produktmatrix PM auf der ersten Fördereinrichtung 10 Reihen der Produktmatrix auf der zweiten Fördereinrichtung 50 geworden.

Nachdem die Produkte P an die zweite Fördereinrichtung 50 übergeben worden sind, wird das vordere Ende 16 des Förderbands 14 aus der zurückgezogenen Stellung wieder nach vorne (d.h. in Fig. 1 nach rechts und somit entgegengesetzt zu der Richtung R) in den Bereich über der zweiten Fördereinrichtung 50 vorgeschoben. Diese Vorschubbewegung der vorderen Bandkante 16 erfolgt schneller als die eigentliche Fördergeschwindigkeit des Förderbands 14. Somit fallen in dieser Phase keine Produkte der auf dem Förderband 14 weiter geförderten Produkte auf das darunterliegende Querförderband 52. In dieser Phase werden die zuvor übergebenen Produkte auf der zweiten Fördereinrichtung 50 bzw. dem zweiten Förderband 52 zur Seite heraus, d.h. in Förderrichtung FR2 abtransportiert. Auf diese Weise entsteht auf dem Förderband 52 Platz für die Ablage der von der ersten Fördereinrichtung 10 übergebenen nächsten Produktmatrix PM oder Produktgruppe PG.

Die Rückzugsbewegung des vorderen Endes 16 des Förderbands 14 (in Richtung R) kann vorteilhafterweise durch eine Auf-/Abbewegung des vorderen Bandendes 16 unterstützt werden. Hierdurch kann die Fallhöhe der Produkte beim Übergang von dem Förderband 14 auf das Förderband 52 reduziert werden, so dass die Produkte gewissermaßen nicht von dem Förderband 14 herunter "fallen" sondern eher vorsichtig abgelegt werden. Insbesondere wird hierbei das vordere Bandende 16 bei der Übergabe der Produkte an das Förderband 52 abgesenkt und anschließend wieder angehoben, wenn es über die zuvor abgelegten Produkte wieder in den Bereich über dem Förderband 52 vorgeschoben wird (entgegengesetzt zur Richtung R).

Darüber hinaus kann das Querförderband 52 während der Übergabe der Produkte P still stehen oder sich mit einer konstanten oder einer variablen Geschwindigkeit bewegen.

Wie eingangs schon erläutert wurde, kann die erfindungsgemäße Vorrichtung dazu verwendet werden, einen gleichmäßigen und/oder identischen Füllgrad mehrerer nebeneinander angeordneter Produktbahnen für einen ausgangsseitigen, nachgeschalteten Prozess zu erreichen. Um ausgangsseitig auf allen Bahnen TA des Querförderbands 52 einen gleichen Füllgrad an Produkten zu erzielen, lässt die Gruppiereinrichtung 30 nur Produkte P auf solchen eingangsseitigen Bahnen TE des ersten Förderbands 12 weiter auf das zweite Förderband 14 der ersten Fördereinrichtung 10 durch, bei denen eingangsseitig mindestens soviele Produkte zugeführt werden, wie es die ausgangsseitig vorgesehene Anzahl an nebeneinander angeordneten Bahnen TA in der Produktmatrix PM erfordert. Hierdurch wird erreicht, dass nach der Übergabe der Produkte an die zweite Fördereinrichtung 50 in jeder ausgangsseitigen Bahn TA die gleiche Anzahl an Produkten vorhanden ist.

Wie oben schon erläutert wurde, ist dieses in Fig. 1 beispielhaft für den Fall dargestellt, dass auf der (von oben gerechnet) vierten Bahn des eingangsseitigen ersten Förderbands 12 durchgängig Produkte fehlen. Die wenigen dennoch zugeführten Produkte dieser Bahn werden von der Gruppiereinrichtung 30 somit aufgestaut und nicht zur Übergabe an das zweite Förderband 14 und insbesondere nicht zur Bildung der Produktmatrix PM freigegeben. Diese Bahn wird daher sozusagen vorübergehend oder vollständig gesperrt. Somit werden die Produkte aus dieser eingangsseitigen Bahn letztlich auch nicht auf das Querförderband 52 der zweiten Fördereinrichtung 50 abgelegt. Wie aus Fig. 1 ersichtlich ist, hat die Produktmatrix PM in diesem Bereich somit eine Lücke bzw. Produktleerstellen PL, indem letztlich auf dem zweiten Förderband 52 hier eine komplette Produktreihe innerhalb der Matrix PM fehlt. Diese Produktlücke PL auf dem Querförderband 52 ist jedoch unschädlich, da in Förderrichtung FR2 vorhergehend und nachfolgend wieder eine vollständige Produktreihe vorhanden ist, wobei die Produkte jeder dieser Reihen ausgangsseitig gleichzeitig an den nachfolgenden Prozessschritt abgegeben werden (indem sie beispielsweise in die Fächer eines Verpackungsbehälters übergeben werden). Folglich werden trotz einer ungleichmäßigen eingangsseitigen Zuführung von Produkten ausgangsseitig in jeder Bahn TA der zweiten Fördereinrichtung 50 die gleiche Anzahl an Produkten abgegeben. Insgesamt ist damit ein gleichmäßiger Füllgrad aller Bahnen TA der zweiten Fördereinrichtung 50 erreichbar, d.h. gewissermaßen ein Produkt- oder Bahn- oder Reihenausgleich.

Wie vorstehend ausgeführt wurde, können die Gruppiereinrichtungen 30 in den einzelnen Bahnen der ersten Fördereinrichtung 10 zur Bildung der Produktgruppen PG bzw. der Produktmatrix PM so arbeiten und durch geeignete Steuerungseinrichtungen derart gesteuert und miteinander synchronisiert werden, dass einzelne Bahnen in der Produktmatrix PM insgesamt gezielt nicht mit Produkten besetzt werden, insbesondere wenn in Förderrichtung vor den Gruppiereinrichtungen 30 in den betroffenen Bahnen keine oder zu wenige Produkte für die Bildung einer vollständigen Produktgruppe PG zugeführt werden. In entsprechender Weise ist es möglich, dass gezielt einzelne definierte Punkte oder Positionen in der Produktmatrix PM nicht mit Produkten besetzt werden, so dass an diesen Stellen jeweils entsprechende Produktlücken oder Produktleerstellen PL verbleiben, wodurch insgesamt eine definierte, regelmäßige oder unregelmäßige Produktmatrix PM gebildet wird. Die so gebildete regelmäßige oder unregelmäßige Anordnung der einzelnen Produkte innerhalb einer Produktmatrix wird, wie oben beschrieben, bei der Übergabe der Produktmatrix an die zweite Fördereinrichtung 50 unverändert beibehalten, so dass die Produktmatrix PM in diesem Muster dann auf der zweiten Fördereinrichtung 50 weiter transportiert wird.

Somit können durch eine geeignete Steuerung und Synchronisation der Gruppiereinrichtungen 30 in den einzelnen Bahnen der ersten Fördereinrichtung 10 gezielt die einzelnen Bahnen der Produktmatrix PM auf der zweiten Fördereinrichtung 50 mit mehr oder weniger Produkten gefüllt werden. Auf diese Weise kann gezielt ein Ausgleich zwischen den Produkten auf den einzelnen Bahnen sowie ein Gleichgewicht oder ein Ungleichgewicht zwischen den Besetzungen der einzelnen Bahnen mit Produkten geschaffen werden. Die auf diese Weise jeweils gezielt eingestellten Muster der Produktmatrix PM hängen von dem jeweiligen Anwendungsfall ab, insbesondere von den Anforderungen des ausgangsseitig folgenden nächsten Prozessschritts. So können die Produkte von der zweiten Fördereinrichtung 50 beispielsweise an eine Verpackungsstation übergeben werden, in der die Produkte einzeln oder in Gruppen verpackt werden, indem sie beispielsweise in einzelne Fächer einer Verpackungsschale oder in einen Verpackungsbehälter übergeben werden. Hierbei kann es beispielsweise gewünscht sein, dass ggf. vorgesehene einzelne Fächer eines Verpackungsbehälters jeweils mit einem Produkt besetzt werden.

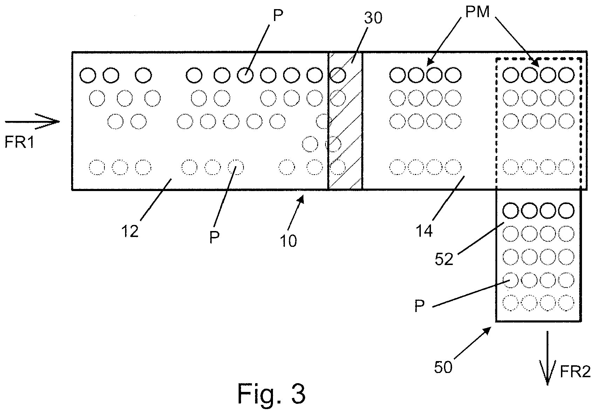

Wie Fig. 3 zeigt, ist mit der vorliegenden Fördervorrichtung auch eine Vermischung der Produkte der unterschiedlichen Zuführbahnen möglich. Wenn die Produkte P auf den einzelnen eingangsseitigen, nebeneinander verlaufenden Bahnen der ersten Fördereinrichtung 10 unterschiedliche Eigenschaften haben, kommt es aufgrund der Übergabe der Produkte an die zweite Fördereinrichtung 50 und durch den quer verlaufenden Abtransport der Produkte zu einer Vermischung dieser Produkte. Handelt es sich bei den Produkten beispielsweise um Backwaren (z.B. Kekse), können die einzelnen Produkte aufgrund des Herstellungsprozesses möglicherweise unterschiedliche Bräunungsgrade und/ oder Gewichte aufweisen. In Fig. 3 haben beispielsweise die auf der (in Fig. 3 von oben aus betrachtet) obersten Bahn zugeführten Produkte einen hohen Bräunungsgrad, während die auf der (in Fig. 3 von oben aus betrachtet) untersten Bahn zugeführten Produkte einen schwachen Bräunungsgrad aufweisen. Da, wie oben beschrieben, durch die Übergabe aus den Zuführbahnen der ersten Fördereinrichtung 10 entsprechende Reihen in der Produktmatrix PM auf der zweiten Fördereinrichtung 50 werden, kommt es im vorliegenden Beispiel somit zu einer Vermischung von Keksen mit stärkerem Bräunungsgrad und mit geringerem Bräunungsgrad, wenn die Produkte einer Bahn der Produktmatrix PM auf der zweiten Fördereinrichtung 50 in einen Verpackungsbehälter abgegeben oder in einer Verpackungseinheit gemeinsam verpackt werden. Eine derartige Vermischung der Produkte ist insbesondere im Backwarenbereich manchmal erwünscht, da auf diese Weise zum Beispiel gleichmäßigere Gewichte der gebildeten Packungen erreicht werden können.

Mit der vorliegenden Fördervorrichtung kann darüber hinaus die Anzahl der Produktbahnen von einer beliebigen Anzahl der eingangsseitigen Bahnen TE auf der ersten Fördereinrichtung 10 auf eine beliebige Anzahl der ausgangsseitigen Bahnen TA auf der zweiten Fördereinrichtung 50 verändert werden. Dieses erfolgt wiederum durch eine geeignete Steuerung und Synchronisation der Gruppiereinrichtungen 30. Während in den Zeichnungen eine von den Gruppiereinrichtungen 30 gebildete Produktmatrix PM dargestellt ist, die vier in Förderrichtung FR1 hintereinander angeordnete Reihen aufweist (wobei jede Reihe senkrecht zu der Förderrichtung FR1 angeordnet ist), können mit der vorliegenden Vorrichtung auch Produktmatrizen mit jeder beliebigen anderen Anzahl von Reihen gebildet werden. Entsprechend den in den Zeichnungen dargestellten vier Reihen der Produktmatrix PM auf der ersten Fördereinrichtung 10 werden ausgangsseitig in der Produktmatrix PM auf der zweiten Fördereinrichtung 50 vier nebeneinander angeordnete Bahnen TA abgegeben (wobei jede Bahn hier wiederum in der zweiten Förderrichtung FR2 verläuft). In entsprechender Weise kann jede andere Anzahl eingangsseitiger und ausgangsseitiger Bahnen realisiert werden (z.B. eine Veränderung von 22 eingangsseitigen Zuführbahnen auf sechs ausgangsseitige Abgabebahnen).

Durch gezielte Steuerung der Gruppiereinrichtungen 30 ist es außerdem möglich, nur Produkte von bestimmten eingangsseitigen Zuführbahnen TE zur Bildung der Produktmatrix PM durchzulassen und an die zweite Fördereinrichtung 50 zu übergeben, während die Produkte der anderen Zuführbahnen von den Gruppiereinrichtungen 30 aufgestaut und zurückgehalten werden. Dieses kann je nach Anwendungsfall wiederum gewünscht sein, wenn die Produkte auf den einzelnen Zuführbahnen TE beispielsweise unterschiedliche Qualitäten oder Merkmale haben und nur Produkte einer bestimmten Qualität zur Übergabe und ausgangsseitigen Abgabe durchgelassen werden sollen.

In einer besonderen Ausführungsform der vorliegenden Fördervorrichtung können die Gruppiereinrichtungen 30 entfallen. Dieses ist möglich, wenn die einzelnen Produkte P eingangsseitig bereits in gut ausgerichteten Reihen nebeneinander liegend zugeführt werden oder wenn alle Bahnen eingangsseitig gleichmäßig mit Produkten gefüllt sind oder wenn andererseits ausgangsseitig kein gleichmäßiger Füllgrad der einzelnen Bahnen für die Abgabe der Produkte erforderlich ist. In diesen Fällen kann die vorliegende Vorrichtung (wie oben beschrieben) insbesondere zur Veränderung der Anzahl der Bahnen (von den eingangsseitigen Bahnen auf die ausgangsseitigen Bahnen) oder zur Vermischung der Produkte der einzelnen Zuführbahnen für die Abgabe verwendet werden.

### Bezugszeichenliste

- P: Stückiges Produkt
- PG: Produktgruppe
- PM: Produktmatrix
- PL: Produktlücke, -leerstelle
- TE: Bahnen eingangsseitig
- TA: Bahnen ausgangsseitig
- FR1: erste Förderrichtung
- FR2: zweite Förderrichtung
- R: Rückzugsrichtung des Förderbands 14
- A: definierter Abstand der Produkte
- B: definierter Abstand der Produkte, Bahnabstand nebeneinander
- Z: Abstand der Produkte
- 10: erste Fördereinrichtung
- 12: erstes Förderband
- 14: (zweites) Förderband, Pull-Nose-Band
- 16: vorderes Ende des Förderbands 14
- 30: Gruppiereinrichtung
- 50: zweite Fördereinrichtung
- 52: Förderband

## Patentansprüche

1. Verfahren zum Fördern und Gruppieren von stückigen Produkten (P), mit folgenden Schritten:
- Zuführen der Produkte (P) mittels einer ersten Fördereinrichtung (10) in einer Bahn (TE) in einer ersten Förderrichtung (FR1), wobei die Produkte (P) in der Bahn (TE) in Förderrichtung (FR1) in beliebigen Abständen (Z) hintereinander liegen;
- Gruppieren der Produkte (P) in der Bahn (TE) mittels einer Gruppiereinrichtung (30) derart, dass in Förderrichtung (FR1) hinter der Gruppiereinrichtung (30) eine definierte Anzahl von Produkten (P) in einer Gruppe (PG) angeordnet ist, wobei die Produkte (P) in jeder Gruppe (PG) mit definierten Abständen (A) in Förderrichtung (FR1) hintereinander in der Bahn (TE) angeordnet sind;
- Weiterfördern der gebildeten Produktgruppe (PG) mittels der ersten Fördereinrichtung (10) in der ersten Förderrichtung (FR1); und
- Übergeben der gebildeten Produktgruppe (PG) an eine zweite Fördereinrichtung (50) zum Weiterfördern der Produkte (P) in einer zweiten Förderrichtung (FR2) derart, dass die Produkte (P) ihre relative Ausrichtung mit den definierten Abständen (A) zueinander in der Produktgruppe (PG) beibehalten und im wesentlichen in einer Reihe nebeneinander liegen;
- wobei die Produkte (P) mittels der ersten Fördereinrichtung (10) auf mehreren, unter im wesentlichen gleichen Abständen (B) nebeneinander und im wesentlichen parallel zueinander angeordneten Bahnen (TE) in der ersten Förderrichtung (FR1) zugeführt werden,
- wobei in jeder Bahn (TE) mittels einer eigenen Gruppiereinrichtung (30) Produktgruppen (PG) gebildet werden, wobei die Bildung der Produktgruppen (PG) in den einzelnen Bahnen (TE) derart miteinander synchronisiert wird, dass in Förderrichtung (FR1) hinter den Gruppiereinrichtungen (30) der nebeneinander angeordneten Bahnen (TE) eine definierte Produktmatrix (PM) gebildet wird, in der die Produkte (P) in den Bahnen (TE) in Förderrichtung (FR1) mit definierten Abständen (A) hintereinander und in Reihen unter den Bahnabständen (B) oder einem ganzzahligen Vielfachen davon nebeneinander angeordnet sind, **dadurch gekennzeichnet, dass**
- die Gruppiereinrichtungen (30) in den einzelnen Bahnen (TE) zur Bildung der Produktmatrix (PM) derart gesteuert und miteinander synchronisiert werden können, dass wahlweise einzelne definierte Positionen in der Produktmatrix (PM) nicht mit Produkten (P) besetzt werden, so dass eine regelmäßige oder unregelmäßige Produktmatrix (PM) gebildet wird, die wahlweise entsprechende Produktlücken (PL) aufweist,
- wobei die in der ersten Fördereinrichtung (10) gebildete Produktmatrix (PM) derart an die zweite Fördereinrichtung (50) übergeben wird, dass die Produkte (P) ihre relative Ausrichtung zueinander in der Produktmatrix (PM) derart beibehalten, dass die vor der Übergabe in der ersten Fördereinrichtung (10) in der Produktmatrix (PM) in einer Reihe nebeneinander angeordneten Produkte (P) nach der Übergabe in der zweiten Fördereinrichtung (50) in der Produktmatrix (PM) unter definierten Abständen, die den Bahnabständen (B) der ersten Fördereinrichtung (10) oder einem ganzzahligen Vielfachen davon entsprechen, in einer Bahn (TA) hintereinander angeordnet sind,
- wobei die Übergabe der Produkte (P) an die zweite Fördereinrichtung (50) dadurch erfolgt, dass die erste Fördereinrichtung (10) mindestens ein umlaufendes Förderband (14) zur Förderung der Produkte (P) in der ersten Förderrichtung (FR1) aufweist, wobei das Förderband (14) ein in Förderrichtung (FR1) vorderes Ende (16) aufweist, das in einem Bereich über der zweiten Fördereinrichtung (50) angeordnet ist und das von hier aus entgegengesetzt (R) zu der ersten Förderrichtung (FR1) zurückziehbar ist, während das Förderband (14) die Produktförderung in der ersten Förderrichtung (FR1) fortsetzt,
- wobei die Übergabe der Produkte (P) an die zweite Fördereinrichtung (50) dadurch erfolgt, dass das vordere Ende (16) des Förderbands (14) zurückgezogen wird, wenn eine vollständige Produktgruppe (PG) oder Produktmatrix (PM) das vordere Ende (16) des Förderbands (14) erreicht, und
- wobei das vordere Ende (16) des Förderbands (14) nach der Übergabe der Produkte (P) an die zweite Fördereinrichtung (50) aus der zurückgezogenen Stellung wieder in den Bereich über der zweiten Fördereinrichtung (50) vorgeschoben wird (Pull-Nose-Band).

2. Verfahren nach Anspruch 1, **dadurch gekennzeichnet, dass** die zweite Förderrichtung (FR2) senkrecht zu der ersten Förderrichtung (FR1) verläuft, und dass die Produkte (P) bei Weiterförderung in der zweiten Förderrichtung (FR2) in der Produktgruppe (PG) in einer senkrecht zu der zweiten Förderrichtung (FR2) verlaufenden Reihe nebeneinander liegen.

3. Verfahren nach Anspruch 1, **dadurch gekennzeichnet, dass** die zweite Förderrichtung (FR2) unter einem Winkel schräg zu der ersten Förderrichtung (FR1) verläuft, und dass die Produkte (P) bei Weiterförderung in der zweiten Förderrichtung (FR2) in der Produktgruppe (PG) in einer unter dem Winkel schräg zu der zweiten Förderrichtung (FR2) verlaufenden Reihe nebeneinander liegen.

4. Verfahren nach einem der Ansprüche 1 bis 3, **dadurch gekennzeichnet, dass** die Bildung der Produktgruppen (PG) in den einzelnen Bahnen (TE) in der ersten Fördereinrichtung (10) zur Bildung der Produktmatrix (PM) derart miteinander synchronisiert wird, dass einzelne Bahnen (TE) in der Produktmatrix (PM) nicht mit Produkten (P) besetzt werden, wenn vor den Gruppiereinrichtungen (30) in den betroffenen Bahnen (TE) keine oder zu wenige Produkte (P) für die Bildung einer vollständigen Produktgruppe (PG) zugeführt werden.

5. Vorrichtung zum Fördern und Gruppieren von stückigen Produkten (P), mit folgenden Merkmalen:
- eine erste Fördereinrichtung (10) zum Zuführen der Produkte (P) in einer Bahn (TE) in einer ersten Förderrichtung (FR1), wobei die Produkte (P) in der Bahn (TE) in Förderrichtung (FR1) in beliebigen Abständen (Z) hintereinander liegen;
- eine Gruppiereinrichtung (30) zum Gruppieren der Produkte (P) in der Bahn (TE) derart, dass in Förderrichtung (FR1) hinter der Gruppiereinrichtung (30) eine definierte Anzahl von Produkten (P) in einer Gruppe (PG) angeordnet ist, wobei die Produkte (P) in jeder Gruppe (PG) mit definierten Abständen (A) in Förderrichtung (FR1) hintereinander in der Bahn (TE) angeordnet sind;
- wobei die gebildete Produktgruppe (PG) mittels der ersten Fördereinrichtung (10) in der ersten Förderrichtung (FR1) weitergefördert wird; und
- eine zweite Fördereinrichtung (50), an die die gebildete Produktgruppe (PG) übergeben wird und die die Produkte (P) in einer zweiten Förderrichtung (FR2) derart weiterfördert, dass die Produkte (P) ihre relative Ausrichtung mit den definierten Abständen (A) zueinander in der Produktgruppe (PG) beibehalten und im wesentlichen in einer Reihe nebeneinander liegen;
- wobei die Produkte (P) mittels der ersten Fördereinrichtung (10) auf mehreren, unter im wesentlichen gleichen Abständen (B) nebeneinander und im wesentlichen parallel zueinander angeordneten Bahnen (TE) in der ersten Förderrichtung (FR1) zugeführt werden,
- wobei in jeder Bahn (TE) mittels einer eigenen Gruppiereinrichtung (30) Produktgruppen (PG) gebildet werden, wobei die Bildung der Produktgruppen (PG) in den einzelnen Bahnen (TE) derart miteinander synchronisiert wird, dass in Förderrichtung (FR1) hinter den Gruppiereinrichtungen (30) der nebeneinander angeordneten Bahnen (TE) eine definierte Produktmatrix (PM) gebildet wird, in der die Produkte (P) in den Bahnen (TE) in Förderrichtung (FR1) mit definierten Abständen (A) hintereinander und in Reihen unter den Bahnabständen (B) oder einem ganzzahligen Vielfachen davon nebeneinander angeordnet sind, **dadurch gekennzeichnet, dass**:
- die Gruppiereinrichtungen (30) in den einzelnen Bahnen (TE) zur Bildung der Produktmatrix (PM) mittels Steuereinrichtungen derart gesteuert und miteinander synchronisiert werden können, dass wahlweise einzelne definierte Positionen in der Produktmatrix (PM) nicht mit Produkten (P) besetzt werden, so dass eine regelmäßige oder unregelmäßige Produktmatrix (PM) gebildet wird, die wahlweise entsprechende Produktlücken (PL) aufweist,
- wobei die in der ersten Fördereinrichtung (10) gebildete Produktmatrix (PM) derart an die zweite Fördereinrichtung (50) übergeben wird, dass die Produkte (P) ihre relative Ausrichtung zueinander in der Produktmatrix (PM) derart beibehalten, dass die vor der Übergabe in der ersten Fördereinrichtung (10) in der Produktmatrix (PM) in einer Reihe nebeneinander angeordneten Produkte (P) nach der Übergabe in der zweiten Fördereinrichtung (50) in der Produktmatrix (PM) unter definierten Abständen, die den Bahnabständen (B) der ersten Fördereinrichtung (10) oder einem ganzzahligen Vielfachen davon entsprechen, in einer Bahn (TA) hintereinander angeordnet sind,
- wobei die erste Fördereinrichtung (10) mindestens ein umlaufendes Förderband (14) zur Förderung der Produkte (P) in der ersten Förderrichtung (FR1) aufweist, wobei das Förderband (14) ein in Förderrichtung (FR1) vorderes Ende (16) aufweist, das in einem Bereich über der zweiten Fördereinrichtung (50) angeordnet ist und das von hier aus entgegengesetzt (R) zu der ersten Förderrichtung (FR1) zurückziehbar ist, während das Förderband (14) die Produktförderung in der ersten Förderrichtung (FR1) fortsetzt,
- wobei die Übergabe der Produkte (P) an die zweite Fördereinrichtung (50) dadurch erfolgt, dass das vordere Ende (16) des Förderbands (14) zurückgezogen wird, wenn eine vollständige Produktgruppe (PG) oder Produktmatrix (PM) das vordere Ende (16) des Förderbands (14) erreicht, und
- wobei das vordere Ende (16) des Förderbands (14) nach der Übergabe der Produkte (P) an die zweite Fördereinrichtung (50) aus der zurückgezogenen Stellung wieder in den Bereich über der zweiten Fördereinrichtung (50) vorgeschoben wird (Pull-Nose-Band).

6. Vorrichtung nach Anspruch 5, **dadurch gekennzeichnet, dass** das vordere Ende (16) des Förderbands (14) in der Höhe über der zweiten Fördereinrichtung (50) variabel ist, wobei das vordere Ende (16) des Förderbands (14) während der Übergabe der Produkte (P) an die zweite Fördereinrichtung (50) im wesentlichen in einer abgesenkten Stellung ist, und wobei das vordere Ende (16) des Förderbands (14) angehoben wird, wenn es nach der Übergabe der Produkte (P) an die zweite Fördereinrichtung (50) wieder in den Bereich über der zweiten Fördereinrichtung (50) vorgeschoben wird.

7. Vorrichtung nach einem der Ansprüche 5 oder 6, **dadurch gekennzeichnet, dass** die zweite Fördereinrichtung (50) ein Förderband (52) zur Förderung der Produkte (P) in der zweiten Förderrichtung (FR2) aufweist, wobei das Förderband (52) während der Übergabe der Produkte (P) an die zweite Fördereinrichtung (50) still steht oder sich mit einer konstanten oder einer variablen Geschwindigkeit bewegt.

8. Vorrichtung nach einem der Ansprüche 5 bis 7, **dadurch gekennzeichnet, dass** die erste Fördereinrichtung (10) ein erstes Förderband (12) und ein diesem in der ersten Förderrichtung (FR1) nachgeschaltetes zweites Förderband (14) aufweist, wobei die Gruppiereinrichtung (30) an dem Übergang von dem ersten Förderband (12) zu dem zweiten Förderband (14) angeordnet ist.

9. Vorrichtung nach einem der Ansprüche 5 bis 8, **dadurch gekennzeichnet, dass** die Gruppiereinrichtung (30) eine Fördereinrichtung mit umlaufenden Mitnehmern für einen Eingriff zwischen zwei aufeinander folgende Produkte (P) aufweist.

10. Vorrichtung nach einem der Ansprüche 5 bis 9, **dadurch gekennzeichnet, dass** die Gruppiereinrichtung (30) Stoppereinrichtungen für ein Aufstauen der auf der ersten Fördereinrichtung (10) zugeführten Produkte (P) aufweist.

11. Vorrichtung nach einem der Ansprüche 5 bis 10, **dadurch gekennzeichnet, dass** für jede Bahn (TE) der auf der ersten Fördereinrichtung (10) zugeführten Produkte (P) eine gesonderte Gruppiereinrichtung (30) vorhanden ist, wobei Steuerungseinrichtungen zum Synchronisieren der Gruppiereinrichtungen (30) der einzelnen Bahnen (TE) miteinander zur Bildung der Produktmatrix (PM) vorgesehen sind.

## Claims

1. A method for conveying and grouping fragmented products (P), said method having the following steps:
supply the products (P) in a first conveying direction (FR1) on a track (TE) by means of a first conveying device (10), wherein the products (P) are located one behind another at arbitrary spacings (Z) on the track (TE) in the conveying direction (FR1);
- group the products (P) on the track (TE) by means of a grouping device (30) in such a manner that a defined number of products (P) are arranged in a group (PG) behind the grouping device (30) in the conveying direction (FR1), wherein the products (P) in each group (PG) are arranged at defined spacings (A) one behind another on the track (TE) in the conveying direction (FR1);
- forward the formed product group (PG) in the first conveying direction (FR1) by means of the first conveying device (10); and
- transfer the formed product group (PG) to a second conveying device (50) for forwarding the products (P) in a second conveying direction (FR2) in such a manner that the products (P) maintain their relative alignment at the defined spacings (A) with respect to one another in the product group (PG) and are essentially located side by side in a row;
- wherein the products (P) are supplied by means of the first conveying device (10) in the first conveying direction (FR1) on several tracks (TE) which are arranged at substantially identical spacings (B) side by side and are substantially parallel to one another,
- wherein product groups (PG) are formed on each track (TE) by means of a distinct grouping device (30), wherein the forming of the product groups (PG) on the individual tracks (TE) is synchronized with one another in such a manner that in the conveying direction (FR1) behind the grouping devices (30) of the tracks (TE) which are arranged side by side, a defined product matrix (PM) is formed in which the products (P) are arranged on the tracks (TE) in the conveying direction (FR1) at defined spacings (A) one behind another and in rows side by side at the track spacings (B) or at an integer multiple thereof,
**characterized in that**
- the grouping devices (30) on the individual tracks (TE) can be controlled and synchronized in such a manner with one another for forming the product matrix (PM) that selectively individual defined positions in the product matrix (PM) are not occupied by products (P) such that a regular or irregular product matrix (PM) is formed which selectively comprises corresponding product gaps (PL),
- wherein the product matrix (PM) formed in the first conveying device (10) is transferred in such a manner to the second conveying device (50) that the products (P) maintain their relative alignment with respect to one another in the product matrix (PM) in such a manner that the products (P), which prior to the transfer are arranged side by side in a row in the product matrix (PM) in the first conveying device (10), after the transfer are arranged one behind another in the product matrix (PM) on a track (TA) in the second conveying device (50) at defined spacings which correspond to the track spacings (B) of the first conveying device (10) or to an integer multiple thereof,
- wherein the transfer of the products (P) to the second conveying device (50) is effected **in that** the first conveying device (10) comprises at least one circulating conveyor belt (14) for conveying the products (P) in the first conveying direction (FR1), wherein the conveyor belt (14) comprises a front end (16) in the conveying direction (FR1) which is arranged in a region above the second conveying device (50) and which can be pulled back from this region in opposition (R) to the first conveying direction (FR1), whilst the conveyor belt (14) continues conveying the products in the first conveying direction (FR1),
- wherein the transfer of the products (P) to the second conveying device (50) is effected as a result of the front end (16) of the conveyor belt (14) being pulled back when a complete product group (PG) or product matrix (PM) reaches the front end (16) of the conveyor belt (14), and
- wherein once the products (P) have been transferred to the second conveying device (50), the front end (16) of the conveyor belt (14) is advanced out of the pulled-back position again into the region above the second conveying device (50) (pull-nose-band) .

2. The method as claimed in claim 1, **characterized in that** the second conveying direction (FR2) extends perpendicularly to the first conveying direction (FR1), and **in that**, when being forwarded in the second conveying direction (FR2), the products (P) are located in the product group (PG) side by side in a row which extends perpendicularly to the second conveying direction (FR2) .

3. The method as claimed in claim 1, **characterized in that** the second conveying direction (FR2) extends obliquely at an angle to the first conveying direction (FR1), and **in that**, when being forwarded in the second conveying direction (FR2), the products (P) are located in the product group (PG) side by side in a row which extends obliquely at an angle to the second conveying direction (FR2).

4. The method as claimed in any one of claims 1 to 3, **characterized in that** the forming of the product groups (PG) on the individual tracks (TE) in the first conveying device (10) for forming the product matrix (PM) is synchronized with one another in such a manner that individual tracks (TE) in the product matrix (PM) are not occupied by products (P) when no products or too few products (P) for the forming of a complete product group (PG) are supplied in front of the grouping devices (30) on the relevant tracks (TE).

5. A device for conveying and grouping fragmented products (P), comprising the following features:
- a first conveying device (10) for supplying the products (P) in a first conveying direction (FR1) on a track (TE), wherein the products (P) are located one behind another at arbitrary spacings (Z) on the track (TE) in the conveying direction (FR1);
- a grouping device (30) for grouping the products (P) on the track (TE) in such a manner that a defined number of products (P) are arranged in a group (PG) behind the grouping device (30) in the conveying direction (FR1), wherein the products (P) in each group (PG) are arranged at defined spacings (A) one behind another on the track (TE) in the conveying direction (FR1);
- wherein the formed product group (PG) is forwarded in the first conveying direction (FR1) by means of the first conveying device (10); and
- a second conveying device (50) to which the formed product group (PG) is transferred and which forwards the products (P) in a second conveying direction (FR2) in such a manner that the products (P) maintain their relative alignment at the defined spacings (A) with respect to one another in the product group (PG) and are essentially located side by side in a row;
- wherein the products (P) are supplied by means of the first conveying device (10) in the first conveying direction (FR1) on several tracks (TE) which are arranged at substantially identical spacings (B) side by side and are substantially parallel to one another,
- wherein product groups (PG) are formed on each track (TE) by means of a distinct grouping device (30), wherein the forming of the product groups (PG) on the individual tracks (TE) is synchronized with one another in such a manner that in the conveying direction (FR1) behind the grouping devices (30) of the tracks (TE) which are arranged side by side, a defined product matrix (PM) is formed in which the products (P) are arranged on the tracks (TE) in the conveying direction (FR1) at defined spacings (A) one behind another and in rows side by side at the track spacings (B) or at an integer multiple thereof,
**characterized in that**
- the grouping devices (30) on the individual tracks (TE) can be controlled and synchronized by control devices in such a manner with one another for forming the product matrix (PM) that selectively individual defined positions in the product matrix (PM) are not occupied by products (P) such that a regular or irregular product matrix (PM) is formed which selectively comprises corresponding product gaps (PL),
- wherein the product matrix (PM) formed in the first conveying device (10) is transferred in such a manner to the second conveying device (50) that the products (P) maintain their relative alignment with respect to one another in the product matrix (PM) in such a manner that the products (P), which prior to the transfer are arranged side by side in a row in the product matrix (PM) in the first conveying device (10), after the transfer are arranged one behind another in the product matrix (PM) on a track (TA) in the second conveying device (50) at defined spacings which correspond to the track spacings (B) of the first conveying device (10) or to an integer multiple thereof,
- wherein the first conveying device (10) comprises at least one circulating conveyor belt (14) for conveying the products (P) in the first conveying direction (FR1), wherein the conveyor belt (14) comprises a front end (16) in the conveying direction (FR1) which is arranged in a region above the second conveying device (50) and which can be pulled back from this region in opposition (R) to the first conveying direction (FR1), whilst the conveyor belt (14) continues conveying the products in the first conveying direction (FR1),
- wherein the transfer of the products (P) to the second conveying device (50) is effected as a result of the front end (16) of the conveyor belt (14) being pulled back when a complete product group (PG) or product matrix (PM) reaches the front end (16) of the conveyor belt (14), and
- wherein once the products (P) have been transferred to the second conveying device (50), the front end (16) of the conveyor belt (14) is advanced out of the pulled-back position again into the region above the second conveying device (50) (pull-nose-band).

6. The device as claimed in claim 5, **characterized in that** the height of the front end (16) of the conveyor belt (14) above the second conveying device (50) is variable, wherein during the transfer of the products (P) to the second conveying device (50) the front end (16) of the conveyor belt (14) is in a substantially lowered position, and wherein the front end (16) of the conveyor belt (14) is raised when it is advanced again into the region above the second conveying device (50) after the transfer of the products (P) to the second conveying device (50).

7. The device as claimed in one of claims 5 or 6, **characterized in that** the second conveying device (50) comprises a conveyor belt (52) for conveying the products (P) in the second conveying direction (FR2), wherein during the transfer of the products (P) to the second conveying device (50) the conveyor belt (52) stands still or is moved at a constant or a variable speed.

8. The device as claimed in one of claims 5 to 7, **characterized in that** the first conveying device (10) comprises a first conveyor belt (12) and a second conveyor belt (14) which is connected downstream of said first conveyor belt in the first conveying direction (FR1), wherein the grouping device (30) is arranged at the transfer from the first conveyor belt (12) to the second conveyor belt (14).

9. The device as claimed in one of claims 5 to 8, **characterized in that** the grouping device (30) comprises a conveying device with circulating entrainment means for engagement between two consecutive products (P).

10. The device as claimed in one of claims 5 to 9, **characterized in that** the grouping device (30) comprises stopper devices for damming up the products (P) supplied on the first conveying device (10).

11. The device as claimed in one of claims 5 to 10, **characterized in that** a separate grouping device (30) is present for each track (TE) of products (P) supplied on the first conveying device (10), wherein control devices for synchronizing the grouping devices (30) of the individual tracks (TE) with one another are provided for forming the product matrix (PM).

## Revendications

1. Procédé de convoyage et de regroupement de produits en morceaux (P) avec les étapes suivantes :
- introduction des produits (P) au moyen d'un premier dispositif de convoyage (10) sur une piste (TE) dans une première direction de convoyage (FR1), les produits (P) étant posés les uns derrière les autres dans la piste (TE) dans la direction de convoyage (FR1) à des intervalles quelconques (Z) ;
- regroupement des produits (P) sur la piste (TE) au moyen d'un dispositif de regroupement (30) de façon à ce que, dans la direction de convoyage (FR1), derrière le dispositif de regroupement (30), un nombre défini de produits (P) sont disposés dans un groupe (PG), les produits (P) de chaque groupe (PG) étant disposés à des distances définies (A) dans la direction de convoyage (FR1) les uns derrière les autres sur la piste (TE) ;
- convoyage ultérieur du groupe de produits (PG) formé au moyen du premier dispositif de convoyage (10) dans la première direction de convoyage (FR1) ; et
- transfert du groupe de produits (PG) formé à un deuxième dispositif de convoyage (50) pour le convoyage ultérieur des produits (P) dans une deuxième direction de convoyage (FR2) de façon à ce que les produits (P) conservent leur orientation relative avec les distances (A) définies entre eux dans le groupe de produits (PG) et sont disposés les uns à côté des autres globalement sur une rangée ;
- les produits (P) étant introduits au moyen du premier dispositif de convoyage (10) sur plusieurs pistes (TE) disposées à des distances (B) globalement égales entre elles et globalement parallèlement entre elles dans la première direction de convoyage (FR1),
- sur chaque piste (TE), au moyen d'un dispositif de regroupement (30) propre, des groupes de produits (PG) étant formés, la formation des groupes de produits (PG) sur les différentes pistes (TE) étant synchronisée de façon à ce que, dans la direction de convoyage (FR1), derrière les dispositifs de regroupement (30) des pistes juxtaposées (TE), une matrice de produits (PM) définie soit formée, dans laquelle les produits (P) sont disposés sur les pistes (TE) dans la direction de convoyage (FR1) à des distances (A) définies les uns derrière les autres et dans des rangées parmi les distances entre les pistes (B) ou un multiple entier de celles-ci les uns à côté des autres,
**caractérisé en ce que**
- les dispositifs de regroupement (30) des différentes pistes (TE) pour la formation de la matrice de produits (PM) peuvent être contrôlés et synchronisés entre eux de façon à ce que certaines positions définies dans la matrice de produits (PM) ne puissent pas être occupées par des produits (P), de façon à ce que matrice de produits (M) régulière ou irrégulière soit formée, qui comprend au choix des lacunes de produits (PL) correspondantes,
- la matrice de produits (PM) formée dans le premier dispositif de convoyage (10) étant transférée au deuxième dispositif de convoyage (50) de façon à ce que les produits (P) conservent leur orientation relative entre eux dans la matrice de produits (PM) de façon à ce que les produits (P), disposés les uns à côté des autres dans une rangée avant le transfert dans le premier dispositif de convoyage (10) dans la matrice de produits (PM), soient disposés, après le transfert dans le deuxième dispositif de convoyage (50), dans la matrice de produits (PM) à des distances définies, qui correspondent aux distances entre les pistes (B) du premier dispositif de convoyage (10) ou à un multiple entier de celles-ci, les uns derrière les autres sur une piste (TA),
- le transfert des produits (P) au deuxième dispositif de convoyage (50) a lieu grâce au fait que le premier dispositif de convoyage (10) comprend au moins une bande de convoyage circulaire (14) pour le convoyage des produits (P) dans la première direction de convoyage (FR1), la bande de convoyage (14) comprenant une extrémité avant (16) dans la direction de convoyage (FR1), qui est disposée dans une zone au-dessus du deuxième dispositif de convoyage (50) et qui peut être replié à partir de là dans le sens inverse (R) à la première direction de convoyage (FR1), tandis que la bande de convoyage (14) continue le convoyage des produits dans la première direction de convoyage (FR1),
- le transfert des produits (P) au deuxième dispositif de convoyage (50) ayant lieu grâce au fait que l'extrémité avant (16) de la bande de convoyage (14) est repliée lorsqu'un groupe de produits (PG) entier ou un matrice de produits (PM) entière atteint l'extrémité avant (16) de la bande de convoyage (14) et
- l'extrémité avant (16) de la bande de convoyage (14) est à nouveau avancée, après le transfert des produits (P) au deuxième dispositif de convoyage (50), de la position repliée vers la zone au-dessus du deuxième dispositif de convoyage (50) (pull-nose-band).

2. Procédé selon la revendication 1, **caractérisé en ce que** la deuxième direction de convoyage (FR2) est perpendiculaire à la première direction de convoyage (FR1), et **en ce que** les produits (P) se trouvent, lors d'un convoyage ultérieur dans la deuxième direction de convoyage (FR2) dans le groupe de produits (PG), les uns à côté des autres dans une rangée perpendiculaire à la deuxième direction de convoyage (FR2).

3. Procédé selon la revendication 1, **caractérisé en ce que** la deuxième direction de convoyage (FR2) s'étend avec un angle par rapport à la première direction de convoyage (FR1) et **en ce que** les produits (P) se trouvent, lors d'un convoyage ultérieur dans la deuxième direction de convoyage (FR2), dans le groupe de produits (PG), les uns à côté des autres dans une rangée inclinée d'un angle par rapport à la deuxième direction de convoyage (FR2).

4. Procédé selon l'une des revendications 1 à 3, **caractérisé en ce que** la formation des groupes de produits (PG) est synchronisée sur les différentes pistes (TE) dans le premier dispositif de convoyage (10) pour la formation de la matrice de produits (PM) de façon à ce que certaines pistes (TE) de la matrice de produits (PM) ne soient pas occupées par des produits (P), lorsque, avant les dispositifs de regroupement (30) dans les pistes (TE) concernées, aucun ou trop peu de produits (P) sont introduits pour la formation d'un groupe de produits (PG) entier.

5. Dispositif de convoyage pour le convoyage et le regroupement de produits en morceaux (P), avec les caractéristiques suivantes :
- un premier dispositif de convoyage (10) pour l'introduction des produits (P) sur une piste (TE) dans une première direction de convoyage (FR1), les produits (P) se trouvant sur la piste (TE) dans la direction de convoyage (FR1) à des distances (Z) quelconques ;
- un dispositif de regroupement (30) pour le regroupement des produits (P) sur la piste (TE) de façon à ce que, dans la direction de convoyage (FR1), derrière le dispositif de regroupement (30), un nombre défini de produits (P) est disposé dans un groupe (PG), les produits (P) étant disposés dans chaque groupe (PG) avec des distances (A) définies dans la direction de convoyage (FR1) les uns derrière les autres sur la piste (TE) ;
- le groupe de produits (PG) formé étant convoyé ultérieurement au moyen du premier dispositif de convoyage (10) dans la première direction de convoyage (FR1) ; et
- un deuxième dispositif de convoyage (50), auquel le groupe de produits (PG) formé est transféré et qui convoie les produits (P) dans une deuxième direction de convoyage (FR2) de façon à ce que les produits (P) conservent leur orientation relative avec les distances (A) définies entre eux dans le groupe de produits (PG) et sont disposées les uns à côté des autres globalement sur une rangée ;
- les produits (P) étant introduits au moyen du premier dispositif de convoyage (10) sur plusieurs pistes (TE) disposées globalement à des distances égales (B) les uns à côté des autres et de manière globalement parallèle entre eux dans la premier direction de convoyage (FR1) ;
- dans chaque piste (TE), au moyen d'un dispositif de regroupement (30) propre, des groupes de produits (PG) sont formés, la formation des groupes de produits (PG) sur les différentes pistes (TE) étant synchronisée de façon à ce que, dans la direction de convoyage (FR1), derrière les dispositifs de regroupement (30) des pistes (TE) disposées les unes à côté des autres, une matrice de produits (PM) définie soit formée, dans laquelle les produits (P) sont disposés, dans les pistes (TE), dans la direction de convoyage (FR1), avec des distances (A) définies les uns derrière les autres et dans des rangées parmi les distances entre les pistes (B) ou avec un multiple entier de celles-ci les uns à côté des autres,
**caractérisé en ce que** :
- les dispositifs de regroupement (30) des différentes pistes (TE) pour la formation de la matrice de produits (PM) peuvent être commandés et synchronisés entre eux au moyen de dispositifs de commande de façon à ce que certaines positions définies au choix dans la matrice de produits (PM) ne soient pas occupées par des produits (P) de façon à ce qu'une matrice de produits (PM) régulière ou irrégulière soit formée, qui comprend au choix des lacunes de produits (PL) correspondantes,
- la matrice de produits (PM) formée dans le premier dispositif de convoyage (10) est transférée au deuxième dispositif de convoyage (50) de façon à ce que les produits (P) conservent leur orientation relative entre eux dans la matrice de produits (PM) de façon à ce que les produits (P), disposés les uns à côté des autres dans une rangée avant le transfert dans le premier dispositif de convoyage (10) dans la matrice de produits (PM), soient disposés, après le transfert dans le deuxième dispositif de convoyage (50), dans la matrice de produits (PM), à des distances définies, qui correspondent aux distances entre les pistes (B) du premier dispositif de convoyage (10) ou à un multiple entier de celles-ci, les uns derrière les autres sur une piste (TA),
- le premier dispositif de convoyage (10) comprenant au moins une bande de convoyage circulaire (14) pour le convoyage des produits (P) dans la première direction de convoyage (FR1), la bande de convoyage (14) comprenant une extrémité avant (16), dans la direction de convoyage (FR1), qui est disposée dans une zone au-dessus du deuxième dispositif de convoyage (50) et qui peut être repliée à partir de là dans le sens inverse (R) à la première direction de convoyage (FR1), tandis que la bande de convoyage (14) continue le convoyage des produits dans la première direction de convoyage (FR1),
- le transfert des produits (P) au deuxième dispositif de convoyage (50) ayant lieu grâce au fait que l'extrémité avant (16) de la bande de convoyage (14) est repliée lorsqu'un groupe de produits (PG) entier ou un matrice de produits (PM) entière atteint l'extrémité avant (16) de la bande de convoyage (14) et
- l'extrémité avant (16) de la bande de convoyage (14) est à nouveau avancée, après le transfert des produits (P) au deuxième dispositif de convoyage (50), de la position repliée vers la zone au-dessus du deuxième dispositif de convoyage (50) (pull-nose-band).

6. Dispositif selon la revendication 5, **caractérisé en ce que** l'extrémité avant (16) de la bande de convoyage (14) est variable en hauteur au-dessus du deuxième dispositif de convoyage (50), l'extrémité avant (16) de la bande de convoyage (14) étant, pendant le transfert des produits (P) au deuxième dispositif de convoyage (50), globalement dans une position abaissée, et l'extrémité avant (16) de la bande de convoyage (14) étant soulevée lorsqu'elle est avancée, après le transfert des produits (P) au deuxième dispositif de convoyage (50), à nouveau vers la zone au-dessus du deuxième dispositif de convoyage (50).

7. Dispositif selon l'une des revendications 5 ou 6, **caractérisé en ce que** le deuxième dispositif de convoyage (50) comprend une bande de convoyage (52) pour le convoyage des produits (P) dans la deuxième direction de convoyage (FR2), la bande de convoyage (52) restant immobile ou se déplaçant avec une vitesse constante ou une vitesse variable pendant le transfert des produits (P) au deuxième dispositif de convoyage (50).

8. Dispositif selon l'une des revendications 5 à 7, **caractérisé en ce que** le premier dispositif de convoyage (10) comprend une première bande de convoyage (12) et une deuxième bande de convoyage (14) branchée en aval de celle-ci dans la première direction de convoyage (FR1), le dispositif de regroupement (30) étant disposé au niveau de la transition de la première bande de convoyage (12) vers la deuxième bande de convoyage (14).

9. Dispositif selon l'une des revendications 5 à 8, **caractérisé en ce que** le dispositif de regroupement (30) comprend un dispositif de convoyage avec des taquets d'entraînement rotatifs pour un emboîtement entre deux produits (P) successifs.

10. Dispositif selon l'une des revendications 5 à 9, **caractérisé en ce que** le dispositif de regroupement (30) comprend des dispositifs d'arrêt pour une accumulation des produits (P) introduits sur le premier dispositif de convoyage (10).

11. Dispositif selon l'une des revendications 5 à 10, **caractérisé en ce que**, pour chaque piste (TE) des produits (P) introduits sur le premier dispositif de convoyage (10), un dispositif de regroupement (30) séparé est prévu, des dispositifs de commande étant prévus pour la synchronisation des dispositifs de regroupement (30) des différentes pistes (TE) entre elles pour la formation de la matrice de produits (PM).
